# EUROPEAN PATENT APPLICATION

(11) **EP 4 701 315 A1**
(43) Date of publication of application: **25.02.2026**
(21) Application number: 23934061.5
(22) Date of filing: 19.04.2023
(51) Int. Cl.: H04W 74/02, H04W 28/16, H04W 84/12

(54) **SHARED ACCESS POINT, SHARING ACCESS POINT, TERMINAL DEVICE, AND COMMUNICATION METHOD**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/015662
(87) International publication number: WO 2024/218916

(57) **Abstract**

A shared access point includes a transmission right acquisition unit and a transmission and reception unit. The transmission right acquisition unit performs transmission right acquisition processing when an instruction to acquire a transmission right is given from a sharing access point. The transmission and reception unit transmits a trigger frame including information for designating an access point and a terminal notified of by the sharing access point as a communication pair or information for designating a plurality of terminals notified of by the sharing access point as the communication pair when the transmission right is acquired.

## Description

### [Technical Field]

Embodiments relate to a shared access point, a sharing access point, a terminal apparatus and a communication method.

### [Background Art]

In the IEEE 802.11be standard, a triggered TXOP sharing (TXS) procedure is scheduled to be defined as a scheme in which an access point (AP) supports data communication between terminals or between the AP and a terminal as a communication pair. The TXS procedure is processing in which an AP ensures a communication period of a specific terminal by using a multi-user (MU)-request-to-send (RTS) TXS Trigger frame.

### [Citation List]

### [Non Patent Literature]

[NPL 1] IEEE P802.11beTM/D3.0, "35.2.1.2 Triggered TXOP sharing procedure", January, 2023

### [Summary of Invention]

### [Technical Problem]

In the TXS, an AP is a mechanism for performing data communication between a communication pair using acquisition of a transmission right for the data communication as a trigger. When it is difficult for the AP to acquire a transmission right based on an enhanced distributed channel access (EDCA), it is assumed that start of data communication between the communication pair is delayed. Therefore, there is the problem that delay increases or jitter characteristics deteriorate. In the next standard after IEEE 802.11be, a multi-AP function in which a plurality of APs are coordinated and cooperate to perform transmission is scheduled, but how the TXS procedure will be applied in the multi-AP function has not been examined.

The present invention has been made in view of the foregoing circumstances, and an object of the present invention is to improve communication characteristics.

### [Solution to Problem]

A shared access point according to an embodiment includes a transmission right acquisition unit and a transmission and reception unit. The transmission right acquisition unit performs transmission right acquisition processing when an instruction to acquire a transmission right is given from a sharing access point. The transmission and reception unit transmits a trigger frame including information for designating an access point and a terminal notified of by the sharing access point as a communication pair or information for designating a plurality of terminals notified of by the sharing access point as the communication pair when the transmission right is acquired.

### [Advantageous Effects of Invention]

According to an embodiment, it is possible to improve communication characteristics.

### [Brief Description of Drawings]

[Fig. 1] Fig. 1 is a block diagram illustrating a configuration of a communication system according to an embodiment.
[Fig. 2] Fig. 2 is a block diagram illustrating an example of a hardware configuration of a sharing AP according to the embodiment.
[Fig. 3] Fig. 3 is a block diagram illustrating an example of a hardware configuration of a shared AP according to the embodiment.
[Fig. 4] Fig. 4 is a block diagram illustrating an example of a hardware configuration of a terminal according to the embodiment.
[Fig. 5] Fig. 5 is a block diagram illustrating an example of a functional configuration of the sharing AP according to the embodiment.
[Fig. 6] Fig. 6 is a block diagram illustrating an example of a functional configuration of the shared AP according to the embodiment.
[Fig. 7] Fig. 7 is a sequence diagram illustrating an operation example of a communication system according to the embodiment.
[Fig. 8] Fig. 8 is a diagram illustrating a frame sequence indicating a first specific example of an operation of a communication system according to the embodiment.
[Fig. 9] Fig. 9 is a diagram illustrating a frame sequence indicating a second specific example of an operation of a communication system according to the embodiment.
[Fig. 10] Fig. 10 is a diagram illustrating a frame sequence indicating a third specific example of an operation of a communication system according to the embodiment.
[Fig. 11] Fig. 11 is a diagram illustrating a frame sequence indicating a fourth specific example of an operation of a communication system according to the embodiment.

### [Description of Embodiments]

Hereinafter, embodiments will be described with reference to the drawings. In the following description, constituent elements having the same functions and configurations are denoted by the same reference numerals.

### 1. Configuration

### 1.1 Configuration of Communication System

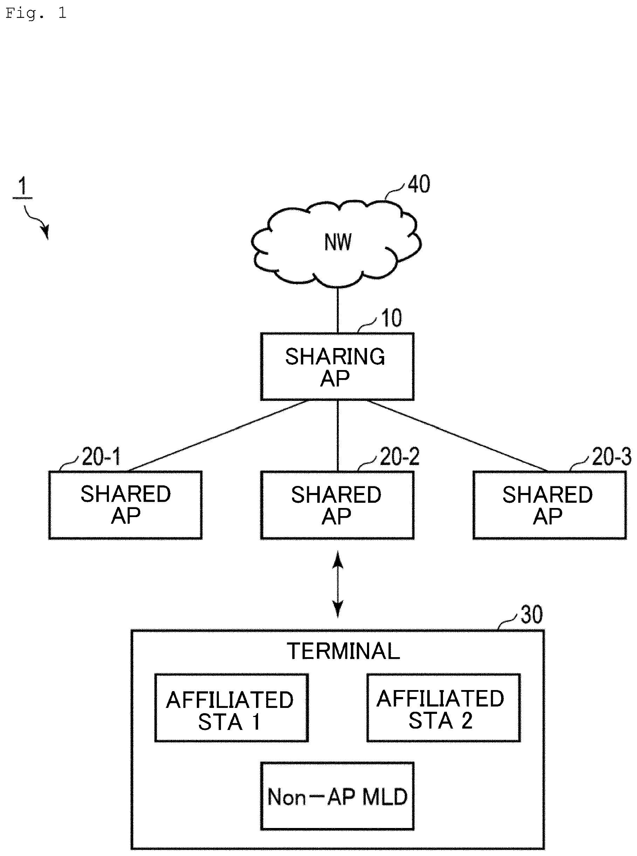

Fig. 1 is a block diagram illustrating an example of a configuration of a communication system 1 according to an embodiment. As illustrated in Fig. 1, the communication system 1 includes a sharing AP 10, shared APs 20-1, 20-2, and 20-3, a terminal 30, and a network (NW) 40.

The sharing AP 10 is, for example, an access point of a wireless local area network (LAN). The sharing AP 10 is configured to communicate with a server (not shown) on the network 40 in a wired or wireless manner. The sharing AP 10 is configured to communicate with each of the shared APs 20-1, 20-2 and 20-3 via wired or wireless communication.

The shared APs 20-1, 20-2, and 20-3 are, for example, access points of the wireless LAN. The shared APs 20-1, 20-2 and 20-3 are located at positions away from each other. Therefore, the shared APs 20-1, 20-2 and 20-3 have mutually different communication areas. The shared APs 20-1, 20-2, and 20-3 are configured to communicate with the terminal 30 in a wireless manner. Communication between each of the shared APs 20-1, 20-2, and 20-3 and the terminal 30 conforms with, for example, the IEEE 802.11 standard. The shared APs 20-1, 20-2 and 20-3 have the same configuration. Hereinafter, when the shared APs 20-1, 20-2 and 20-3 are not particularly distinguished from each other, the shared APs 20-1, 20-2 and 20-3 are referred to as the shared APs 20 in some cases.

The terminal 30 is, for example, a wireless terminal such as a smartphone or a personal computer (PC). The terminal 30 is configured to communicate with a server on the network 40 by communicating with the sharing AP 10 via at least one shared AP 20 among the shared APs 20-1, 20-2 and 20-3. That is, the terminal 30 and the sharing AP 10 can be said to be connected wirelessly via at least one shared AP 20 among the shared APs 20-1, 20-2 and 20-3. Hereinafter, such a wireless connection scheme between the terminal 30 and the sharing AP 10 is also referred to as a multi-AP connection scheme.

Specifically, the terminal 30 includes a non-AP MLD, and an affiliated STA (station) 1 and an affiliated STA 2. The non-AP MLD is a multi-link device (MLD) in the terminal 30 and is an entity configured to be logically wirelessly connected (that is, establish a wireless link) to the sharing AP 10 in conformity with the multi-AP connection scheme. The affiliated STA1 and the affiliated STA2 are entities configured to be physically and wirelessly connected (that is, exchange data) to the shared AP 20 in the multi-AP connection scheme.

In the multi-AP connection scheme, a wireless link via the shared AP 20-1, a wireless link via the shared AP 20-2, and a wireless link via the shared AP 20-3 are comprehensively established between the sharing AP 10 and the non-AP MLD of a terminal 30. That is, the shared APs 20-1, 20-2 and 20-3 are candidates for a transient point of data exchange between the sharing AP 10 and the terminal 30. Then, each of the affiliated STA1 and the affiliated STA2 of the terminal 30 selects one wireless link among the established wireless links and executes data exchange. Although the terminal 30 is described by taking a terminal which is an MLD for realizing a multi-link configuration as an example, it may be a terminal of a non-multi-link configuration (non-MLD).

The sharing AP 10, the shared APs 20-1, 20-2 and 20-3, and the terminal 30 have, for example, a wireless communication function based on the open systems interconnection (OSI) reference model. In the OSI reference model, the wireless communication function is divided into seven layers (Layer 1: the physical layer, Layer 2: the data link layer, Layer 3: the network layer, Layer 4: the transport layer, Layer 5: the session layer, Layer 6: the presentation layer, and Layer 7: the application layer). The data link layer includes the logical link control (LLC) sublayer and the medium access control (MAC) sublayer.

### 1.2 Hardware Configuration

Next, hardware configurations of the access point and the terminal in the communication system 1 according to the embodiment will be described.

### 1.2.1 Hardware Configuration of Sharing AP

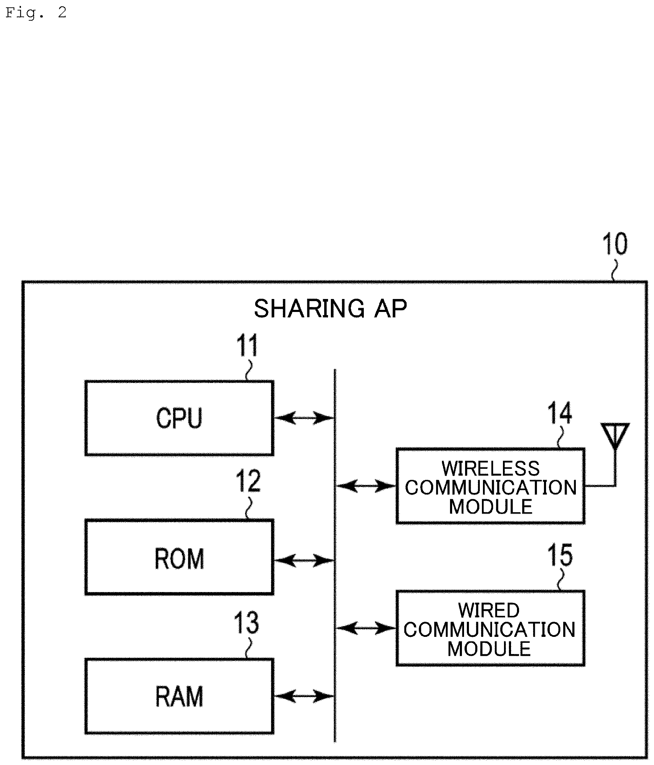

Fig. 2 is a block diagram illustrating an example of a hardware configuration of the sharing AP 10 according to the embodiment. As illustrated in Fig. 2, the sharing AP 10 includes, for example, a central processing unit (CPU) 11, a read only memory (ROM) 12, a random access memory (RAM) 13, a wireless communication module 14, and a wired communication module 15.

The CPU 11 is a processing circuit that controls an operation of the entire sharing AP 10. The ROM 12 is, for example, a nonvolatile semiconductor memory. The ROM 12 stores programs and data for controlling the sharing AP 10. The RAM 13 is, for example, a volatile semiconductor memory. The RAM 13 is used as a work area for the CPU 11. The wireless communication module 14 is a circuit connected to an antenna and used for transmission and reception of data using a wireless signal. The wireless communication module 14 is used for wireless connection with the network 40, the shared AP 20, or the terminal 30. The wired communication module 15 is a circuit used for transmission and reception of data using a wired signal. The wired communication module 15 is used for wired connection with the network 40 or the shared AP 20.

### 1.2.2 Hardware Configuration of Shared AP

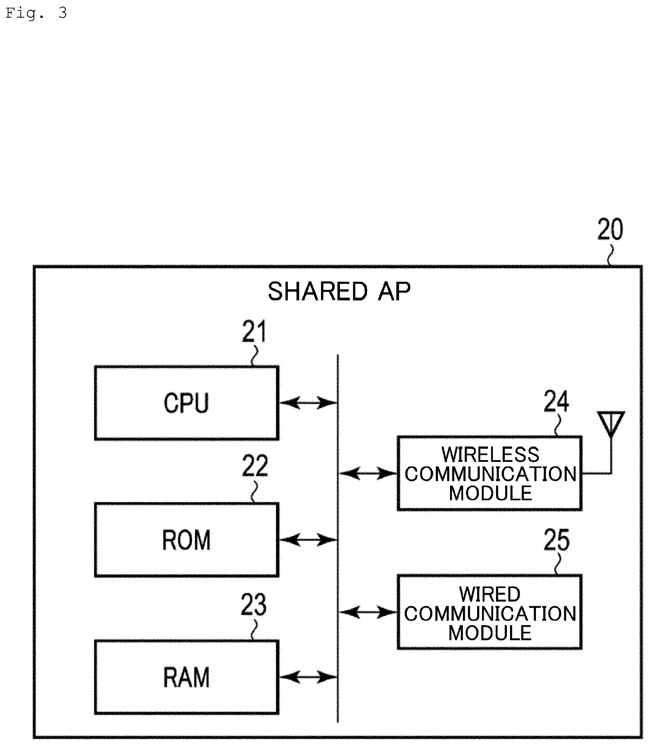

Fig. 3 is a block diagram illustrating an example of a hardware configuration of the shared AP according to the embodiment. As illustrated in Fig. 3, the shared AP 20 includes, for example, a CPU 21, a ROM 22, a RAM 23, a wireless communication module 24, and a wired communication module 25.

The CPU 21 is a processing circuit that controls an operation of the entire shared AP 20. The ROM 22 is, for example, a nonvolatile semiconductor memory. The ROM 22 stores programs and data for controlling the shared AP 20. The RAM 23 is, for example, a volatile semiconductor memory. The RAM 23 is used as a work area of the CPU 21. The wireless communication module 24 is a circuit connected to an antenna and used for transmission and reception of data using a wireless signal. The wireless communication module 24 is used for wireless connection with the sharing AP 10 or the terminal 30. The wired communication module 25 is a circuit used for transmission and reception of data using a wired signal. The wired communication module 25 is used for wired connection with the sharing AP 10.

### 1.2.3 Hardware Configuration of Terminal

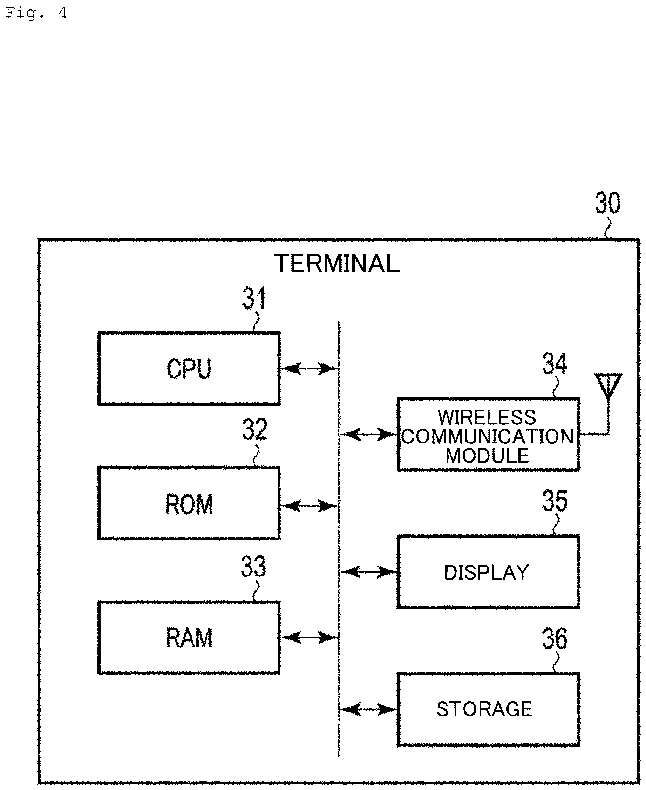

Fig. 4 is a block diagram illustrating an example of a hardware configuration of the terminal 30 according to the embodiment. As illustrated in Fig. 4, the terminal 30 includes, for example, a CPU 31, a ROM 32, a RAM 33, a wireless communication module 34, a display 35, and a storage 36.

The CPU 31 is a processing circuit that controls an operation of the entire terminal 30. The ROM 32 is, for example, a nonvolatile semiconductor memory. The ROM 32 stores programs and data for controlling the terminal 30. The RAM 33 is, for example, a volatile semiconductor memory. The RAM 33 is used as a work area for the CPU 31. The wireless communication module 34 is a circuit connected to an antenna and used for transmission and reception of data using a wireless signal. The display 35 is, for example, a liquid crystal display (LCD) or an electro-luminescence (EL) display. The display 35 displays a graphical user interface (GUI) or the like corresponding to application software. The storage 36 is a nonvolatile storage device. The storage 36 stores system software of the terminal 30 or the like.

### 1.3 Functional Configuration

Next, functional configurations of the access point and the terminal in the communication system 1 according to the embodiment will be explained.

### 1.3.1 Functional Configuration of Sharing AP

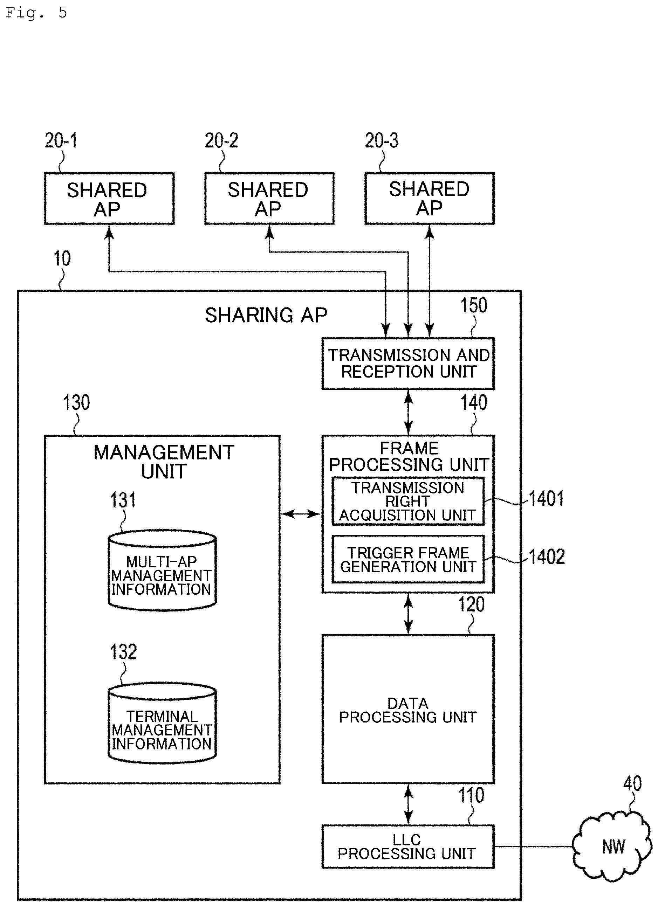

Fig. 5 is a block diagram illustrating an example of a functional configuration of the sharing AP 10 according to the embodiment.

The sharing AP 10 functions as a computer that includes an LLC processing unit 110, a data processing unit 120, a management unit 130, a frame processing unit 140, and a transmission and reception unit 150. The LLC processing unit 110 is a functional block that performs processing corresponding to the LLC sublayer of Layer 2 and Layer 3 to Layer 7. The data processing unit 120, the management unit 130, and the frame processing unit 140 are functional blocks that perform processing corresponding to the MAC sublayer of Layer 2.

The LLC processing unit 110 generates an LLC packet by adding, for example, a destination service access point (DSAP) header, a source service access point (SSAP) header, and the like to data received from the network 40. The LLC processing unit 110 inputs the generated LLC packet to the data processing unit 120. The LLC processing unit 110 extracts the data from the LLC packet input from the data processing unit 120. Then, the LLC processing unit 110 transmits the extracted data to the network 40.

The data processing unit 120 inputs the LLC packet input from the LLC processing unit 110 to the frame processing unit 140. The data processing unit 120 inputs the LLC packet input from the frame processing unit 140 to the LLC processing unit 110.

The management unit 130 controls establishment of logical wireless connection (wireless link) between the sharing AP 10 and the non-AP MLD of the terminal 30 in the multi-AP connection. For example, the management unit 130 inputs an acquisition instruction for performing transmission right acquisition processing to the frame processing unit 140 in response to a traffic transmission request generated in the network 40 and received by the shared AP 20 or the sharing AP 10 itself (own device). The sharing AP 10 may also perform the transmission right acquisition processing.

Further, the management unit 130 stores multi-AP management information 131 and terminal management information 132. The multi-AP management information 131 stores information regarding access points (that is, the sharing AP 10 and the shared APs 20-1, 20-2 and 20-3) used for the multi-AP connection. Specifically, the information regarding the access points includes, for example, an identifier, a frequency band, operation parameters, and a transmission buffer amount.

The identifier includes, for example, a MAC address of a corresponding access point.

The frequency band includes information indicating a frequency band used by the corresponding access point. The frequency band that can be applied is, for example, a 2.4 GHz band, a 5 GHz band, a 6 GHz band, a 45 GHz band, a 60 GHz band, or the like. Each frequency band includes a plurality of channels.

The operation parameters include, for example, CWmin, CWmax, an arbitration interframe space (AIFS), and transmission opportunity (TXOP) Limit. CWmin and CWmax indicate minimum and maximum values of a contention window, respectively. The contention window is a parameter used to calculate backoff that is a transmission waiting time for collision avoidance. AIFS is a fixed transmission waiting time set for each traffic access category. The traffic access category includes, for example, "voice (VO)", "video (VI)", "best effort (BE)", and "background (BK)", and "low latency (LL)". TXOPLimit indicates an upper limit of an occupation period TXOP of a channel. The transmission buffer amount indicates an amount of data to be transmitted to a transmission destination held by each AP. The transmission buffer amount indicates, for example, an amount of data held in a transmission queue for each access category of EDCA of traffic.

In the terminal management information 132, information regarding the terminal 30 wirelessly connected to the sharing AP 10 by the multi-AP connection scheme is stored. Specifically, for example, an identifier of the non-AP MLD of the terminal 30 and an identifier of the shared AP 20 through wireless connection with the terminal 30 are stored in the terminal management information 132. The identifier of the non-AP MLD of the terminal 30 includes, for example, a MAC address of the non-AP MLD of the terminal 30. The identifier of the shared AP 20 through wireless connection with the terminal 30 includes, for example, a MAC address of the shared AP 20. In this way, in the terminal management information 132, information for identifying the non-AP MLD of the terminal 30 connected by the multi-AP connection scheme is stored. Therefore, in the terminal management information 132, the MAC address for identifying the affiliated STA in the terminal 30 connected by the multi-AP connection scheme may not be stored.

The frame processing unit 140 further includes a transmission right acquisition unit 1401 and a trigger frame generation unit 1402.

The transmission right acquisition unit 1401 inputs an instruction to acquire the transmission right to the transmission and reception unit 150. The transmission right acquisition unit 1401 may input the information to the transmission and reception unit 150 in order to transmit the information regarding the shared AP 20 and the terminal 30 to be designated as a communication pair of data communication based on the transmission right to the shared AP 20 along with the instruction to acquire the transmission right. In a method of designating a communication pair, for example, when the sharing AP 10 receives a traffic transmission request from the network 40, the transmission right acquisition unit 1401 may transmit information regarding the communication pair of the terminal 30 that becomes a destination and one of the shared APs 20 that becomes a connection destination of the terminal 30 to each shared AP 20 along with an instruction to acquire the transmission right. As the shared AP 20 that is a communication pair, one predetermined shared AP may be designated or a shared AP may be sequentially designated in order whenever a traffic transmission request is generated.

The sharing AP 10 may determine the shared AP 20 in which there is data to be preferentially transmitted, such as data accumulated in a transmission queue by a threshold value or more with reference to the multi-AP management information 131 stored in the management unit 130. In this case, the shared AP 20 requests the sharing AP 10 to acquire the transmission right. In the sharing AP 10, the shared AP 20 that have requested the acquisition of the transmission right may be designated as the communication pair. Alternatively, the sharing AP 10 may acquire a buffer state (BSR or the like) from each shared AP 20 at predetermined intervals and may designate the shared AP 20 in which there is data to be preferentially transmitted from the buffer state as the communication pair.

The trigger frame generation unit 1402 generates a trigger frame when the own device acquires the transmission right. The frame processing unit 140 inputs the generated trigger frame to the transmission and reception unit 150. The trigger frame is a frame that includes information for designating a specific AP (for example, the shared AP 20) and the terminal 30 as a communication pair or information for designating a plurality of terminals 30 as a communication pair, and serves as a trigger for starting data communication between the communication pair. Examples of the trigger frame include, for example, a multi-user request-to-send (MU-RTS) frame and an MU-RTS triggered TXOP sharing (TXS) Trigger frame used in a TXS procedure. The trigger frame may be a frame that have any format as long as a field for designating a device (the sharing AP 10, the shared AP 20, and the terminal 30) performing data communication as a communication pair can be ensured.

The transmission and reception unit 150 transmits an instruction to perform transmission right acquisition processing to the shared APs 20-1, 20-2 and 20-3. The transmission and reception unit 150 transmits (for example, broadcasts) the trigger frame. The transmission and reception unit 150 receives data or a traffic transmission request from the network 40 and inputs the data or the traffic transmission request to the frame processing unit 140. The transmission and reception unit 150 performs the transmission right acquisition processing based on the instruction to acquire the transmission right from the transmission right acquisition unit 1401.

### 1.3.2 Functional Configuration of Shared AP

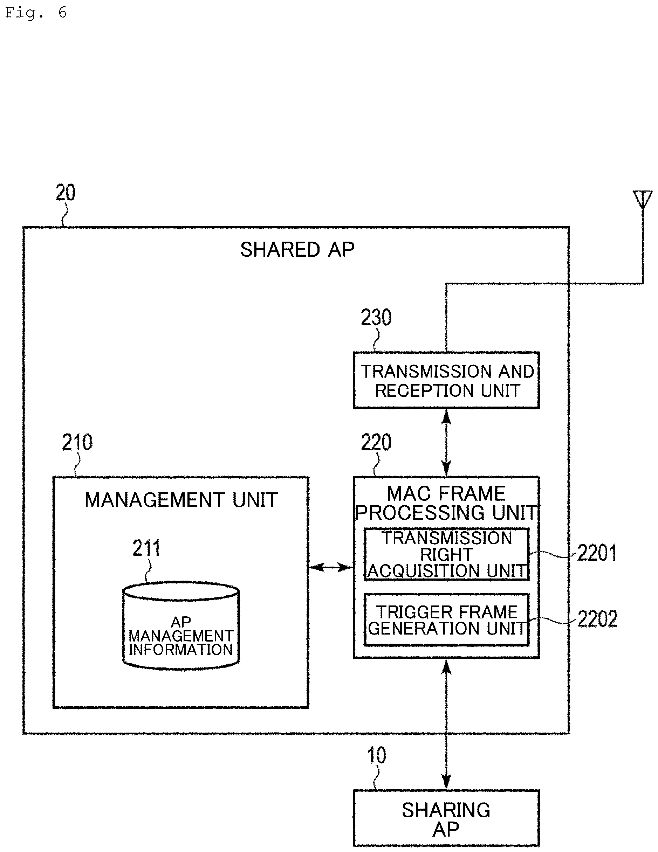

Fig. 6 is a block diagram illustrating an example of a functional configuration of the shared AP 20 according to the embodiment.

The shared AP 20 functions as a computer that includes a management unit 210, a MAC frame processing unit 220, a transmission and reception unit 230. The MAC frame processing unit 220 further includes a transmission right acquisition unit 2201 and a trigger frame generation unit 2202. The management unit 210 and the MAC frame processing unit 220 are functional blocks which perform processing corresponding to the MAC sublayer of Layer 2. The transmission and reception unit 230 is a functional block that performs processing corresponding to Layer 1.

The management unit 210 stores AP management information 211. In the AP management information 211, information regarding the communication pair of the designated shared AP 20 and terminal 30 is stored along with an instruction for the transmission right acquisition processing.

The MAC frame processing unit 220 generates a MAC frame by adding a MAC header to the LLC packet received from the sharing AP 10. The MAC frame processing unit 220 inputs the generated MAC frame to the transmission and reception unit 230. The MAC frame processing unit 220 transmits the MAC frame input from the transmission and reception unit 230 to the sharing AP 10.

The transmission right acquisition unit 2201 performs the transmission right acquisition processing in response to an instruction from the sharing AP 10. As the transmission right acquisition processing, for example, general transmission right acquisition processing for performing carrier sense multiple access with collision avoidance (CSMA/CA) based on access parameters of EDCA may be performed.

When the own device acquires the transmission right earliest among the access points in the transmission right acquisition unit 2201, the trigger frame generation unit 2202 generates a trigger frame that includes information for designating one of the access points notified of by the sharing AP 10 (that is, one of the sharing AP 10 and the plurality of shared APs 20) and the terminal 30 as a communication pair or information for designating a plurality of terminals notified of by the sharing AP 10 as a communication pair. As a method for designating a communication pair of the shared AP 20 and the terminal 30, information regarding the shared AP 20 that is stored in the AP management information 211 of the management unit 210 and is to be designated as a communication pair may be referred to.

The transmission and reception unit 230 generates a wireless frame by adding a preamble or the like to the trigger frame and the MAC frame input from the MAC frame processing unit 220, performs predetermined conversion processing, and then transmits the converted wireless frame as a wireless signal to the outside. Examples of the predetermined conversion processing from the wireless frame to the wireless signal include convolutional encoding processing, interleaving processing, subcarrier modulation processing, inverse fast Fourier transform processing, orthogonal frequency division multiplexing (OFDM) modulation processing, and frequency conversion processing. The transmission and reception unit 230 converts a wireless signal received from the terminal 30 into a wireless frame. Examples of the conversion processing from the wireless signal to the wireless frame include frequency conversion processing, OFDM demodulation processing, fast Fourier transform processing, subcarrier demodulation processing, deinterleaving processing, and Viterbi decoding processing. The transmission and reception unit 230 extracts a MAC frame from the converted wireless frame. The transmission and reception unit 230 inputs the extracted MAC frame to the MAC frame processing unit 220.

### 2. Operation of Communication System

### 2.1 Operation of Entire Communication System

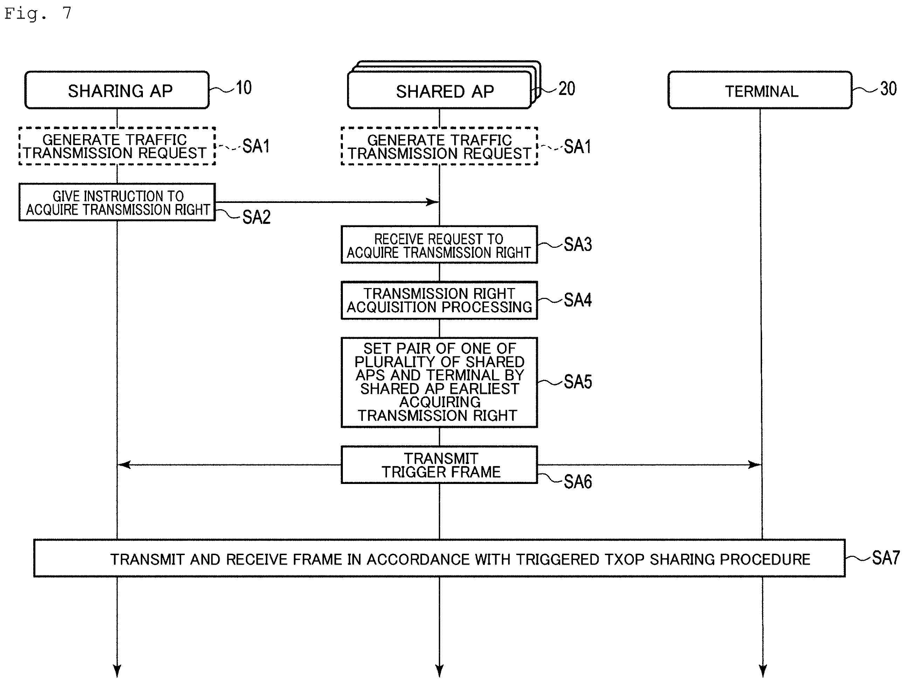

An example of an operation of the communication system 1 according to the embodiment will be described below with reference to the flowchart of Fig. 7.

In step SA1, it is assumed that a traffic transmission request is generated in either the sharing AP 10 or the plurality of shared APs 20.

In step SA2, the management unit 130 of the sharing AP 10 transmits an instruction to acquire a transmission right to each shared AP 20 via the frame processing unit 140 in response to the generation of the traffic transmission request.

In step SA3, the transmission and reception unit 230 of each shared AP 20 receives the instruction to acquire the transmission right.

In step SA4, the transmission right acquisition unit 2201 of each shared AP 20 performs the transmission right acquisition processing. When the sharing AP 10 performs the transmission right acquisition processing in addition to the shared AP 20, the transmission right acquisition unit 1401 of the sharing AP 10 may transmit an instruction to acquire the transmission right to each shared AP 20, and then perform the transmission right acquisition processing.

In step SA5, the trigger frame generation unit 2202 of the shared AP 20 that has acquired the transmission right earliest among the access points which have performed the transmission right acquisition processing generates a trigger frame in which one of the plurality of shared APs 20 and the terminal 30 are designated as a communication pair. Specifically, for example, the MAC frame processing unit 220 of the shared AP 20 which has acquired the transmission right earliest may designate the shared AP 20 having a largest transmission buffer amount as a communication pair with the terminal 30 with reference to AP management information 211 of the management unit 210.

In step SA6, the transmission and reception unit 230 of the shared AP 20 that has acquired the transmission right earliest transmits a trigger frame. Here, the trigger frame is broadcast.

In step SA7, the sharing AP 10, each shared AP 20, and the terminal 30 receive the trigger frame. Thereafter, the shared AP 20 designated with the trigger frame transmits and receives the frame to and from the terminal 30. In other words, data communication between the communication pair designated in step SA5 is performed in accordance with the TXS procedure.

### 2.2 First Specific Example of Operation of Communication System

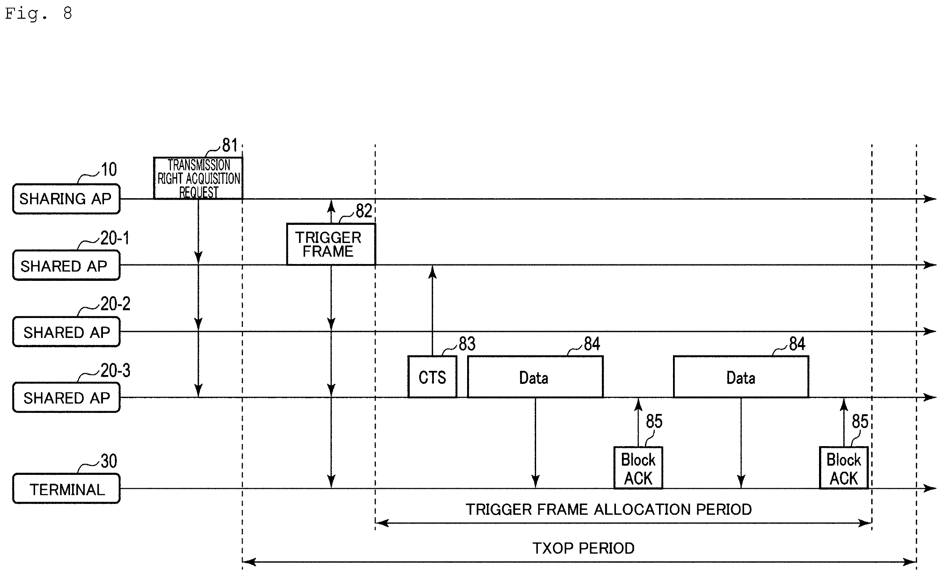

As a first specific example, a case where the shared AP 20 that has acquired the transmission right earliest designates another shared AP 20 as a communication pair will be described with reference to the frame sequence diagram of Fig. 8.

Fig. 8 illustrates a frame sequence indicating exchange of frames among the sharing AP 10, the shared AP 20-1, the shared AP 20-2, the shared AP 20-3, and the terminal 30 from the upper side to the lower side. Here, it is assumed that the shared AP 20-3 and the terminal 30 are designated as a communication pair.

The sharing AP 10 transmits a transmission right acquisition request 81 to the shared AP 20-1, the shared AP 20-2, and the shared AP 20-3. Here, it is assumed that the shared AP 20-1 acquires the transmission right earliest. The trigger frame generation unit 2202 of the shared AP 20-1 broadcasts the trigger frame 82 including MAC addresses of the shared AP 20-3 and the terminal 30 in a field, for example, an MU-RTS TXS Trigger frame, here. After the trigger frame 82 is transmitted, a trigger frame allocation period secured for data communication is set.

The sharing AP 10, the shared AP 20-2, and the shared AP 20-3 that are access points other than the shared AP 20-1 determine whether the own device is designated as a communication pair in the received trigger frame 82. Specifically, for example, the data processing unit 120 of the sharing AP 10 and the MAC frame processing unit 220 of the shared AP 20 determine whether a MAC address of the own access point is designated in the trigger frame 82.

The sharing AP 10, the shared AP 20-1, and the shared AP 20-2 do not transmit and receive signals during the trigger frame allocation period since the MAC addresses of the APs are not included in the trigger frame 82. Conversely, since the MAC address of the shared AP 20-3 is included in the trigger frame 82, a clear to send (CTS) 83 is transmitted as a response to the trigger frame 82 to the shared AP 20-1 that is a transmission source of the trigger frame 82.

Thereafter, frames are transmitted and received between the shared AP 20-3 and the terminal 30 in accordance with the TXS procedure. In the example of Fig. 8, a data frame 84 (Data in Fig. 8) is transmitted from the shared AP 20-3 to the terminal 30. After the data frame 84 is received, the terminal 30 transmits BlockACK 85 which is an acknowledgment indicating the reception to the shared AP 20-3. The transmission and the reception of the frames between the shared AP 20-3 and the terminal 30 are performed within the trigger frame allocation period defined with the trigger frame 82.

That is, when the terminal 30 designates the own device as a communication pair designated in the trigger frame transmitted by one or more of the shared APs 20 or the sharing AP 10, the terminal 30 transmits and receives the frames to and from one of the shared APs 20 designated in the trigger frame or the sharing AP 10.

According to the embodiment, the frames transmitted and received within the trigger frame allocation period may be frames for multi-users, such as data frames based on orthogonal frequency division multiple access (OFDMA).

### 2.3 Second Specific Example of Operation of Communication System

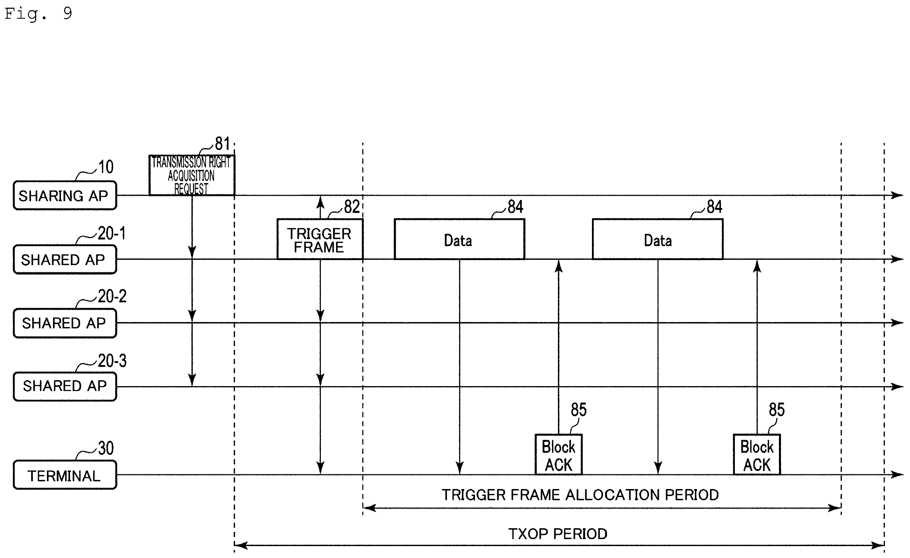

As a second specific example, a case where the shared AP 20 itself which has acquired the transmission right earliest is designated as a communication pair in data communication with the terminal 30 will be described with reference to the frame sequence diagram of Fig. 9. The sequence until the transmission of the transmission right acquisition request 81 and the trigger frame 82 is the same as that illustrated in Fig. 8.

Since the shared AP 20-1 generates a data frame 84 using the MAC address of the own device as information regarding a communication pair, it can be ascertained that the own device performs data communication. Thus, the shared AP 20-1 transmits the data frame 84 to the terminal 30 after the trigger frame 82 is transmitted, for example, after a short interframe space (SIFS) period has passed. The terminal 30 transmits a block ACK 85 corresponding to the data frame 84 to the shared AP 20-1.

### 2.4 Third Specific Example of Operation of Communication System

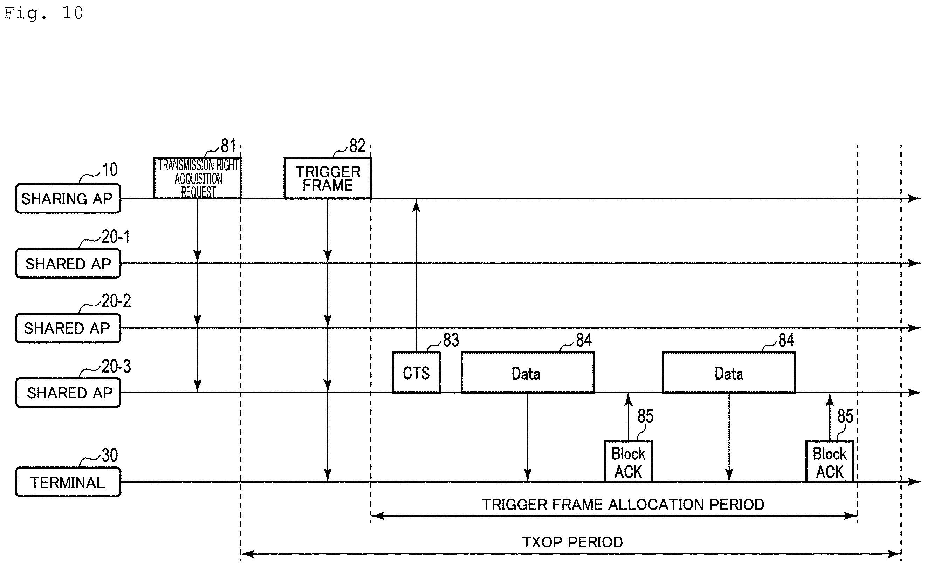

As a third specific example, without being limited to only the shared AP 20, the sharing AP 10 may also acquire the transmission right. A case where the sharing AP 10 acquires the transmission right will be described with reference to the frame sequence diagram of Fig. 10.

The sharing AP 10 determines that the own device acquires the transmission right after the transmission right acquisition request 81 is transmitted to each shared AP 20. In this case, the sharing AP 10 broadcast the trigger frame 82. Thereafter, the shared AP 20-3 may perform the data communication with the terminal 30 as in Fig. 8.

After the transmission right is acquired, the sharing AP 10 may transmit the trigger frame for designating the sharing AP 10 itself as a communication pair with the terminal 30 and performs the data communication with the terminal 30.

### 2.5 Fourth Specific Example of Operation of Communication System

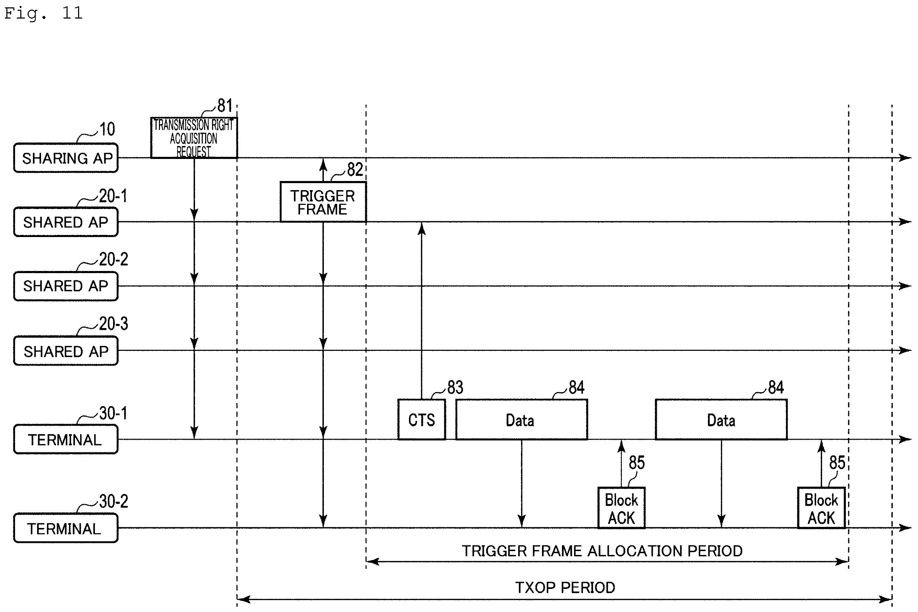

As a fourth specific example, a case where two terminals 30 are designated as a communication pair performing data communication instead of the APs and the terminal 30 will be described with reference to the frame sequence diagram of Fig. 11. To facilitate description, it is assumed that two terminals 30 are distinguished as terminals 30-1 and 30-2, and the terminal 30-1 has data to be transmitted to the terminal 30-2.

As described above in Figs. 8 to 10, the sharing AP 10 transmits the transmission right acquisition request 81 to each shared AP 20. Here, it is assumed that the shared AP 20-1 has acquired the transmission right earliest. The trigger frame generation unit 2202 of the shared AP 20-1 broadcasts the trigger frame 82 in which the MAC addresses of the terminals 30-1 and 30-2 are included in a field, for example, an MU-RTS TXS Trigger frame, here. After the trigger frame 82 is transmitted, a trigger frame allocation period secured for data communication is set.

Since the sharing AP 10, the shared AP 20-1, the shared AP 20-2, and the shared AP 20-3 do not include own MAC addresses in the trigger frame 82, no signals are not transmitted and received during the trigger frame allocation period. Conversely, since the own MAC address is included in the trigger frame 82 as a response to the trigger frame 82, the terminal 30-1 transmits the CTS 83 to the shared AP 20-1 which is a transmission source of the trigger frame 82.

Thereafter, frames are transmitted and received between the terminals 30-1 and 30-2 according to the TXS procedure. In the example illustrated in Fig. 11, the data frame 84 is transmitted from the terminal 30-1 to the terminal 30-2. After the data frame 84 is received, the terminal 30-2 transmits BlockACK 85 to the terminal 30-1 and then transmits and receives frames.

In the data communication between the terminals 30 illustrated in Fig. 11, it is assumed that the shared AP 20-1 acquires the transmission right, as illustrated in Fig. 8. The present invention is not limited thereto, the sharing AP 10 may acquire the transmission right. That is, as illustrated in Fig. 10, the sharing AP 10 may acquire the transmission right and transmit the trigger frame 82 in which the terminal 30-1 and the terminal 30-2 are designated as a communication pair.

In the above-described embodiment, the case where three shared APs 20-1, 20-2, and 20-3 belong to the sharing AP 10 has been described. The present invention is not limited thereto. For example, the number of shared APs 20 belonging to the sharing AP 10 may be one, two, or four or more.

According to the above-described embodiment, in the multi-AP connection in which there are a plurality of access points, at least each shared AP performs the transmission right acquisition processing in response to a traffic transmission request generated in the sharing AP or the shared AP. The AP acquiring the transmission right earliest generates and transmits the trigger frame for designating the AP that performs the data communication with the terminal. The AP receiving the trigger frame starts transmitting and receiving frames with the terminal in accordance with a triggered TXOP sharing procedure when the own address is designated in the trigger frame.

Accordingly, since the transmission right acquisition processing and the transmission and reception processing of the frames can be smoothly implemented, it is possible to reduce delay from the generation of the data transmission request to the implementation of the data communication and it is possible to improve jitter characteristics. As a result, it is possible to improve communication characteristics.

Each of the types of processing in the sharing AP and the shared AP according to the above-described embodiment can be stored as a program that can be executed by a processor serving as a computer. In addition, the program can be stored in a storage medium of an external storage device such as a magnetic disk, an optical disc, or a semiconductor memory to be distributed. The processor can perform the above-described transmission right acquisition processing and frame transmission and reception processing by reading a program stored in the storage medium of the external storage device and controlling an operation in accordance with the read program.

The present invention is not limited to the above-described embodiment and various modifications can be made in various forms at an implementation stage without departing from the gist of the invention within the scope of the present invention. The embodiments may be combined as appropriate. In that case, the combined effects can be obtained. Further, the above-described embodiments include various inventions and the various inventions can be extracted by combinations selected from the plurality of disclosed constituent elements. For example, even if some of the constituent elements are deleted from all the constituent elements described in the embodiment, the configuration from which these constituent elements are deleted can be extracted as an invention as long as the problem can be solved and the effects can be obtained.

### [Reference Signs List]

1 Communication system
10 Sharing AP
20, 20-1, 20-2, 20-3 Shared AP
30, 30-1, 30-2 Terminal
40 Network (NW)
11, 21, 31 CPU
12, 22, 32 ROM
13, 23, 33 RAM
14, 24, 34 Wireless communication module
15, 25 Wired communication module
35 Display
36 Storage
110 LLC processing unit
120 Data processing unit
130, 210 Management unit
131 Multi-AP management information
132 Terminal management information
140 Frame processing unit
150, 230 Transmission and reception unit
211 AP management information
220 MAC frame processing unit
1401, 2201 Transmission right acquisition unit
1402, 2202 Trigger frame generation unit

## Claims

1. A shared access point comprising:
a transmission right acquisition unit configured to perform transmission right acquisition processing when an instruction to acquire a transmission right is given from a sharing access point; and
a transmission and reception unit configured to transmit a trigger frame including information for designating an access point and a terminal notified of by the sharing access point as a communication pair or information for designating a plurality of terminals notified of by the sharing access point as the communication pair when the transmission right is acquired.

2. The shared access point according to claim 1, wherein, when the own device is designated in the trigger frame, the transmission and reception unit transmits the trigger frame, and then transmits and receives a frame to and from the terminal.

3. The shared access point according to claim 1, wherein the transmission and reception unit transmits and receives a frame to and from the terminal in accordance with a triggered TXOP sharing (TXS) procedure.

4. A shared access point comprising:
a transmission and reception unit configured to receive a trigger frame including information for designating an access point and a terminal as a communication pair notified of by a sharing access point or the shared access point; and
a processing unit configured to determine whether the own device is designated as the communication pair in the trigger frame,
wherein the transmission and reception unit transmits and receives a frame to and from the terminal when the own device is designated as the communication pair.

5. A sharing access point comprising:
a transmission and reception unit configured to transmit an instruction to acquire a transmission right to each of a plurality of shared access points when a traffic transmission request is generated; and
a transmission right acquisition unit configured to perform transmission right acquisition processing by the own device,
wherein the transmission and reception unit transmits a trigger frame including information for designating one of the plurality of shared access points and the own device and a terminal as a communication pair or information for designating a plurality of terminals as the communication pair when the own device acquires the transmission right.

6. A sharing access point comprising:
a transmission and reception unit configured to transmit an instruction to acquire a transmission right to each of a plurality of shared access points when a traffic transmission request is generated,
wherein, in the transmission right acquisition instruction, the transmission and reception unit also notifies information for designating one of the plurality of shared access points and the terminal as a communication pair.

7. A terminal apparatus configured to transmit and receive, when the own device is designated as a communication pair designated in a trigger frame transmitted by one or more shared access points or sharing access points, a frame to and from the shared access point or the sharing access point designated in the trigger frame.

8. A communication method comprising:
performing transmission right acquisition processing when an instruction to acquire a transmission right is given from a sharing access point; and
transmitting a trigger frame including information for designating an access point and a terminal notified of by the sharing access point as a communication pair or information for designating a plurality of terminals notified of by the sharing access point as the communication pair when the transmission right is acquired.
